# EUROPÄISCHE PATENTANMELDUNG

(11) **EP 2 424 069 A2**
(43) Veröffentlichungstag der Anmeldung: **29.02.2012**
(21) Anmeldenummer: 11177797.5
(22) Anmeldetag: 17.08.2011
(51) Int. Cl.: H02J 7/00

(54) **Anlage zur Formierung von Lithium-Ionen-Zellen**

(30) Priorität: 26.08.2010 AT 5282010; 04.10.2010 AT 6112010
(71) Anmelder: AVL List GmbH, 8020 Graz (AT)
(72) Erfinder: Gschweitl, Kurt, 8063 Eggersdorf (AT); Schweiger, Mario, 8042 Graz (AT); Hennige, Volker Diethelm, 8020 Graz (AT); Kortschak, Bernhard, 8530 Deutschlandsberg (AT); Wiedemann, Uwe, 8010 Graz (AT)
(74) Vertreter: Laminger, Norbert

(57) **Zusammenfassung**

Eine Anlage zur Formierung von Lithium-Ionen-Zellen 1 umfasst vorzugsweise einen Objektträger für die zu formierenden Lithium-Ionen-Zellen 1 und ein Formiersystem mit einem elektrischen Schaltkreis mit einer AD/DC-Umrichtereinheit 3, allenfalls mit mehreren DC-Ausgängen 4, mit welcher die Lithium-Ionen-Zellen elektrisch leitend verbunden werden können.

Um damit ein energieoptimiertes Formieren zu ermöglichen, ist an jeden der DC-Ausgänge 5 ein Batteriemanagementsystem 6 angeschlossen und mit zumindest einer Lithium-Ionen-Zelle 1 verbindbar.

## Beschreibung

Die Erfindung betrifft eine Anlage zur Formierung von Lithium-Ionen-Zellen, umfassend vorzugsweise einen Objektträger für die zu formierenden Lithium-Ionen-Zellen und ein Formiersystem, enthaltend einen elektrischen Schaltkreis mit einer AD/DC-Umrichtereinheit, allenfalls mit mehreren DC-Ausgängen, mit welcher die Lithium-Ionen-Zellen elektrisch leitend verbunden werden können.

Formierung bezeichnet das erstmalige Durchlaufen einer definierten Lade-Entlade-Sequenz einer Lithium-Ionen-Zelle und findet als Teil des Herstellungsprozesses von Lithium-Ionen Zellen in eigens dafür konzipierten Anlagen statt.

Unter Lithium-Ionen-Zellen werden alle Arten von elektrochemischen Zellen mit einem Lithium-haltigen Elektrolyten verstanden. Sie können eine negative Elektrode aufweisen, bestehend aus einer Trägerfolie und einem Aktivmaterial aus Graphiten, Metallen, Legierungen oder Titanaten zur Einlagerung des Lithiums. Weiters kann eine positive Elektrode vorgesehen sein, bestehend einer Trägerfolie und einem Aktivmaterial umfassend Lithium und zumindest einem oder mehreren der Elemente Ni, Mn, Co, Fe, Mg, V, P. Der Elektrolyt kann in flüssiger, fester oder gelifizierter Form vorliegen, und es kann allenfalls auch ein Separator vorhanden sein.

Die zu formierenden Lithium-Ionen-Zellen werden vorzugsweise auf einem Objektträger fixiert und dem Formiersystem zugeführt. Während des Formierens wird jede Lithium-Ionen Zelle automatisch mit einem elektrischen Schaltkreis elektrisch leitend verbunden. Diese Schaltkreise bilden den Hauptbestandteil des Formiersystems. Der elektrische Zwischenkreis der Anlage ist als AC-DC-Inverter mit einem AC-Eingang und mehreren DC-Ausgängen realisiert. System-Architekturen dieser Art (1 AC-Eingang, multiple DC-Ausgänge) sehen zur Minimierung von Energieverlusten während des Formierens typischerweise zwei Möglichkeiten vor. Einerseits eine Energieverzweigung zwischen getrennten DC-Kreisen, um die Entlade-Energie einer Lithium-Ionen-Zelle (an DC-Kreis 1) über den Zwischenkreis in eine andere Lithium-Ionen-Zelle (an DC-Kreis n) umzuleiten, wo diese Energie verwendet wird, um die Lithium-Ionen-Zelle zu laden, oder andererseits eine Energierückspeisung zwischen DC-AC-Kreis. Hierbei werden die Entlade-Energien (DC) mehrerer Lithium-Ionen-Zellen gebündelt über den Zwischenkreis in den AC-Kreis zurückgespeist. In solchen Anlagen ist die Effizienz der DC-AC-Energierückspeisung aufgrund der niedrigen Eingangsspannungen an der DC-Seite durch einen geringen Wirkungsgrad gekennzeichnet. Diese DC-Ausgänge sind dadurch gekennzeichnet, dass sie maximale DC-Ausgangssignale von < 6 Volt und Ströme von einigen wenigen bis zu einigen hundert Ampere realisieren.

Die Aufgabe der vorliegenden Erfindung war daher eine Formier-Anlage derart auszuführen, dass ein energieoptimiertes Formieren möglich ist.

Zur Lösung dieser Aufgabe ist eine eingangs beschriebene Anlage dadurch gekennzeichnet, dass an jeden der DC-Ausgänge ein Batteriemanagementsystem angeschlossen und mit zumindest einer Lithium-Ionen-Zelle verbindbar ist. Damit ist ein hinsichtlich DC-AC Energierückspeisung effizienteres und energieoptimiertes Formieren ermöglicht, wobei das Batteriemanagementsystem vorzugsweise aber kein Bestandteil des Formiersystems an sich ist.

Gemäß einer vorteilhaften Ausführungsform der Anlage ist jeder der DC-Ausgänge energierückspeisefähig realisiert ist.

Vorteilhafterweise ist gemäß einem weiteren optionalen Merkmal der Erfindung vorgesehen, dass das Formiersystem einen AC-Eingang und einen DC-Ausgang aufweist, wobei letzterer maximale DC-Ausgangssignale bis zu einigen hundert Ampere und hunderten Volt realisiert.

Gemäß einer weiteren Ausführungsform der Erfindung ist an den oder jeden DC-Ausgang des Formiersystems ein DC/DC-Wandler, vorzugsweise ein isolierter DC/DC-Wandler, angeschlossen und mit dem Batteriemanagementsystem verbunden.

Die Zellen können dem Formiersystem separat zugeführt werden, Dabei werden die Zellen in einer bevorzugten Ausführung über ein Zubringersystem einzeln auf einem Objekträger fixiert und dem Formiersystem zugeführt.

In der nachfolgenden Beschreibung soll die Erfindung anhand eines Ausführungsbeispiels und der beigefügten Zeichnungen näher erläutert werden.

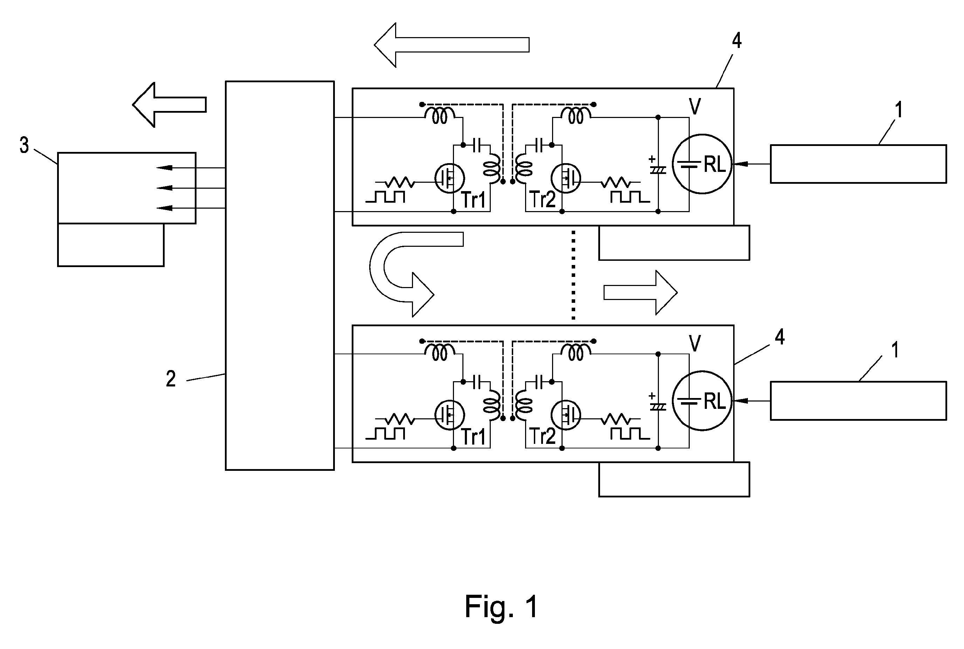

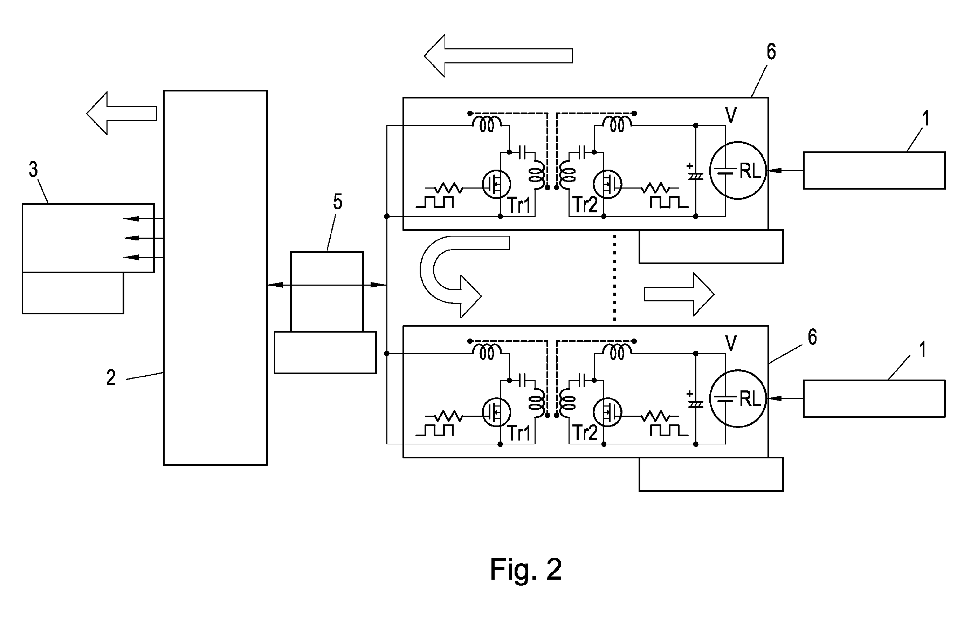

Dabei zeigt die Fig. 1 den schematischen Aufbau eines Formier-System für Lithium-Ionen-Zellen gemäß dem Stand der Technik, mit einem AC-Eingang und n DC-Ausgängen, und Fig. 2 ist eine Darstellung des schematischen Aufbaus eines erfindungsgemäßen Formier-Systems unter Verwendung eines Batteriemanagementsystems.

Die Anlage, deren Schaltplan schematisch in Fig. 1 dargestellt ist, ist ein mögliches Ausführungsbeispiel einer Anlage für die Formierung von Lithium-Ionen-Zellen 1, die vorzugsweise auf einem Objektträger fixiert und dem Formiersystem derart zugeführt sind. Während des Formierens wird jede Lithium-Ionen Zelle 1 automatisch mit einem elektrischen Schaltkreis elektrisch leitend verbunden, wobei der elektrische Zwischenkreis 2 der Anlage als AC-DC-Inverter, typischerweise als 2-Wege-3-Phasen-Inverter, mit einem Wechselstrom-Eingang 3, typischerweise einem 3-Phasen-Wechselstrom-Eingang, und mehreren - in der Zeichnung zwei - Gleichstrom-Ausgängen 4 realisiert ist. Diese Gleichstrom-Ausgänge 4 sind typischerweise als trennende Gleichstrom-Umrichter ausgeführt.

Wie durch den Pfeil beim Wechselstrom-Eingang 3 symbolisiert ist, kann der Wechselstrom-Quelle regenerative Energie aus dem elektrischen Zwischenkreis 2 der Anlage zugeführt werden. Der Pfeil oberhalb des oberen Gleichstrom-Ausganges 4 symbolisiert dabei den Entlade-Strom aus den Lithium-Ionen-Zellen 1, während der Lade-Strom durch den kurzen Pfeil nach rechts oberhalb des unteren Gleichstrom-Ausganges 4 symbolisiert ist. Der gebogene Pfeil links oberhalb des unteren Gleichstrom-Ausganges 4 symbolisiert eine Regeneration, eine Energieverzweigung zwischen den getrennten DC-Kreisen 4, wodurch die Entlade-Energie einer Lithium-Ionen-Zelle 1 (hier beispielsweise der oberen Zelle) über den Zwischenkreis 2 in eine andere Lithium-Ionen-Zelle 1 (hier beispielsweise die untere Zelle) umgeleitet wird, wo diese Energie zur Ladung dieser anderen Lithium-Ionen-Zelle 1 verwendet wird.

Um eine energieeffizientere Formierung zu gewährleisten, ist ein in Fig. 2 dargestelltes neues Anlagenkonzept vorgesehen, bei dem prinzipiell nur ein DC-Ausgang 5 vorgesehen sein muss. An diesen DC-Ausgang 5 oder jeden weiteren DC-Ausgang, dem ein AC-DC-Inverter 2, typischerweise als 2-Wege-3-Phasen-Inverter ausgeführt, sowie der Wechselstrom-Eingang 3, typischerweise ein 3-Phasen-Wechselstrom-Eingang, vorgeschaltet ist, ist ein Batteriemanagementsystem 6 bzw. eine Gruppe von Batteriemanagementsystemen 6 angeschlossen und mit jeweils zumindest einer Lithium-Ionen-Zelle 1 verbindbar.

Batteriemanagementsysteme werden zur Steuerung von Batterien verwendet und umfassen üblicherweise Sensoren zur Messung der Zelltemperaturen, Sensoren zur Messung von Zelleinzelspannungen, Sensoren zur Messung des Stromes, eine elektronische Schaltung zur Verschiebung von Ladungen von einer (beliebigen) Zelle in eine andere Zelle (auch als "Balancing" bezeichnet), sowie Sicherheitseinrichtungen (Schütze, Sicherungen, etc.). Im dargestellten Beispiel ist jedes Batteriemanagement-System 6 auch als trennender Gleichstrom-Umrichter ausgeführt oder beinhaltet einen solchen.

Das Batteriemanagement-System 6 dient als elektrische Schnittstelle zwischen zu formierenden Zellen 1 und dem Formiersystem. Die DC-seitige Verteilung der Energie auf die einzelnen Lithium-Ionen-Zellen 1 erfolgt nicht mehr als Teil der integrierten Schaltkreise der Formier-Anlage, sondern durch das Batteriemanagementsystem 6, das auch als Schnittstelle zur DC-AC-Energierückspeisung dient, wenn vorteilhafterweise der oder jeder der DC-Ausgänge 5 Bestandteil eines energierückspeisefähigen Formiersystems ist. Das erfindungsgemäße Formiersystem weist nur mehr einen AC-Eingang 3 und vorteilhafterweise nur einen DC-Ausgang 5 auf, wobei letzterer maximale DC-Ausgangssignale bis zu einigen hundert Ampere und hunderten Volt realisiert. An den oder jeden DC-Ausgang 5 des Formiersystems kann ein DC/DC-Wandler, vorzugsweise ein isolierter DC/DC-Wandler 6, angeschlossen und mit dem Batteriemanagementsystem verbunden sein.

Wieder sind durch die Pfeile entsprechend der Fig. 1 die Einspeisung regenerativer Energie, der Entlade-Strom aus den Lithium-Ionen-Zellen 1, der Lade-Strom für die Lithium-Ionen-Zellen 1 als auch die Energieverzweigung zwischen den getrennten Batteriemanagementsystemen 6 symbolisiert.

In einer bevorzugten Ausführung werden die Zellen vor der Formierung zu einem Modul elektrisch miteinander verbunden. In einem Modul sind üblicherweise bis zu fünf Zellen parallel und bis zu 14 Zellen in Serie miteinander verbunden. An dieses Modul wird dann das Batteriemanagementsystem direkt angeschlossen, welches dabei Teil der Formierungsanlage sein kann. In einer anderen Ausführungsform ist das Batteriemanagementsystem aber Teil des Moduls in der späteren Batterie und verbleibt nach der Formierung am Modul.

In einer weiteren Ausführungsform können auch mehrere Module in Serie miteinander verbunden sein. In allen Fällen kann ein Ladungsausgleich zwischen zwei beliebigen Zellen erfolgen. Die Berechnung welche Zelle Ladung aufnimmt und welche Zelle Ladung abgibt erfolgt innerhalb des Batteriemanagementsystems und ist unabhängig von der Formierungsanlage.

## Patentansprüche

1. Anlage zur Formierung von Lithium-Ionen-Zellen, umfassend vorzugsweise einen Objektträger für die zu formierenden Lithium-Ionen-Zellen und ein Formiersystem, enthaltend einen elektrischen Schaltkreis mit einer AD/DC-Umrichtereinheit, allenfalls mit mehreren DC-Ausgängen, mit welcher die Lithium-Ionen-Zellen elektrisch leitend verbunden werden können, **dadurch gekennzeichnet, dass** an jeden der DC-Ausgänge (5) ein Batteriemanagementsystem (6) angeschlossen und mit zumindest einer Lithium-Ionen-Zelle (1) verbindbar ist.

2. Anlage nach Anspruch 1, **dadurch gekennzeichnet, dass** jeder der DC-Ausgänge (5) energierückspeisefähig realisiert ist.

3. Anlage nach Anspruch 1, **dadurch gekennzeichnet, dass** das Formiersystem einen AC-Eingang (3) und einen DC-Ausgang (5) aufweist, wobei letzterer maximale DC-Ausgangssignale bis zu einigen hundert Ampere und hunderten Volt realisiert.

4. Anlage nach Anspruch 1 oder 2, **dadurch gekennzeichnet, dass** an den oder jeden DC-Ausgang (5) des Formiersystems ein DC/DC-Wandler, vorzugsweise ein isolierter DC/DC-Wandler (6), angeschlossen und mit dem Batteriemanagementsystem verbunden ist.
